# EUROPEAN PATENT APPLICATION

(11) **EP 1 881 460 A1**
(43) Date of publication of application: **23.01.2008**
(21) Application number: 07252848.2
(22) Date of filing: 18.07.2007
(51) Int. Cl.: G07C 5/08

(54) **Integrated data logging unit**

(30) Priority: 18.07.2006 GB 0614184
(71) Applicant: Farnham, John Edward, Ibstock, Leicestershire LE67 6PA (GB)
(72) Inventor: Farnham, John Edward, Ibstock, Leicestershire LE67 6PA (GB)
(74) Representative: Hallam, Arnold Vincent

(57) **Abstract**

An integrated data logging unit for use in a vehicle comprising data input means for capturing data relating to a position of said unit. The unit comprises analysis means for analysing said captured data and for associating said data with stored geographical information. The unit also has information output means for outputting said captured data and said associated geographical information. The input means comprises image capture means for capturing images related to said position, and a position locator for calculating co-ordinates directly indicative of said position. The analysis means is configured to analyse said calculated coordinates and to associate said stored geographical information with said co-ordinates and said information output means comprises visual display means for displaying said captured images, and said geographical information associated with said co-ordinates.

## Description

The present invention relates to an integrated data logging unit, and in particular but not limited to, an integrated data logging unit for logging data related to the position of a motor vehicle on a race track.

It is well known for motor racing vehicles to be equipped with equipment for monitoring vehicle telemetry and other data relating, for example, to the speed of the vehicle, engine speed, gear changes, fuel consumption, track position, etc. Typically this equipment is permanently installed in the vehicle and is configured to wirelessly transmit data to a trackside central processing unit in, for example, the pits or the like, where team members can monitor and analyse vehicle and/or driver performance. In some systems the data equipment is configured to allow the download of data directly from the vehicle, after the vehicle has come to a stop, for example, post race. After a race or practice the downloaded / transmitted data can be further analysed by the driver and driving/race vehicle experts to determine areas for improvement in either the vehicle set up or the drivers race technique.

Currently available equipment, however, is complex, expensive and requires expert installation in a vehicle. Furthermore, the equipment tends to be targeted at experienced drivers who can easily relate the transmitted or downloaded parametric data to track position, simply be reviewing the data, and coming experience and memory based conclusions about where and how time has been lost. The equipment does not generally provide any direct indication of what has occurred at specific locations to cause a loss of time, for example, braking too early, following an incorrect driving line, or simply being caught in traffic.

Video cameras may be provided to assist in training, but such cameras are relatively expensive and require skilled installation.

The present invention provides an integrated data logging unit, which provides relative ease of installation combined with benefits in the training of novice drivers.

According to the present invention there is provided an integrated data logging unit comprising: data input means for capturing data relating to a position of said unit; analysis means for analysing said captured data and for associating said data with stored geographical information; and information output means for outputting said captured data and said associated geographical information; wherein said input means comprises image capture means for capturing images related to said position, and a position locator for calculating co-ordinates directly indicative of said position; wherein said analysis means is configured to analyse said calculated co-ordinates and to associate said stored geographical information with said co-ordinates; and wherein said information output means comprises visual display means for displaying said captured images, and said geographical information associated with said co-ordinates.

Preferable features of the invention are set out in the dependent claims.

The present invention is particularly advantageous in that it allows for a handheld unit which can be preloaded with data specific to known driving route or course and a particular vehicle. The unit can simply be positioned within the vehicle by a user in order to allow them to gauge their driving ability relative to preloaded driving data. The recorded data can be reviewed and uploaded to a computer for further analysis or dissemination and can be displayed with reference to preloaded or recorded images in a manner which is easily identifiable to inexperienced users.

The recorded data can be deleted and subsequent data recorded or uploaded without the need for complicated installation procedures. Thus a single unit can be reused in varying vehicles or locations with ease.

The invention will now be described by way of example only with reference to the attached figures in which:
Figure 1 shows a simplified block schematic of a data logging unit according to the invention;
Figure 2 shows a simplified flow chart of a menu system provided to a user of the unit of figure 1; and
Figure 3 shows a simplified flow chart of a sub-menu provided to a user of the unit of figure 1.

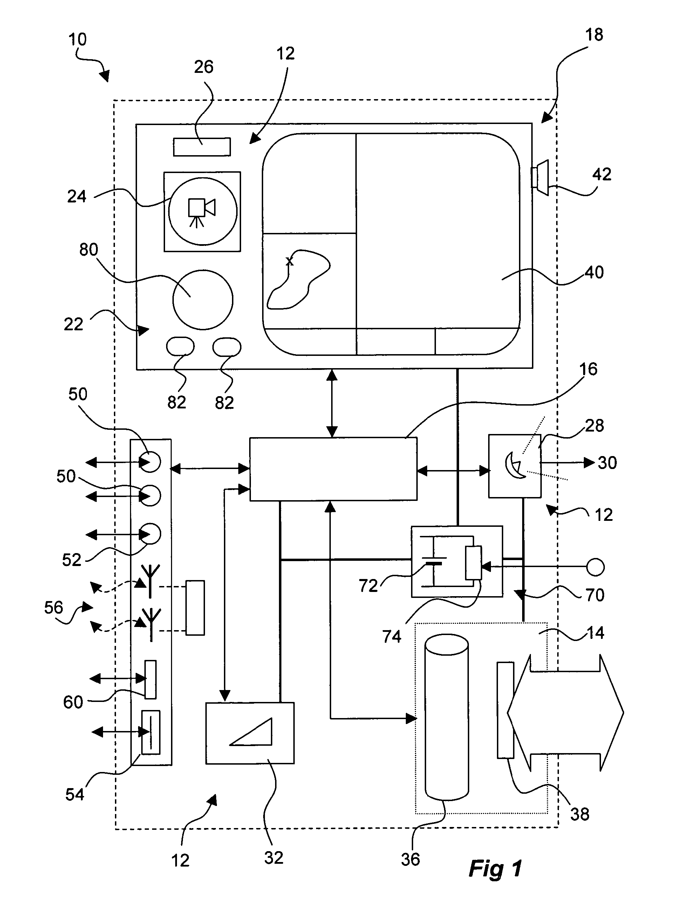

In figure 1 a block schematic of an integrated data logging unit is shown generally at 10. The unit 10 comprises data acquisition means 12, data storage means 14, micro-control circuitry 16, output means 18, external connection means 20, and manual control means 22 integrated into a single hand portable unit, which may be placed in any suitable vehicle. The vehicle may be provided with a suitable cradle for receiving the unit 10, in operation, to hold the unit securely in a desired position within or on the vehicle.

It will be appreciated that although the unit will be described, in particular to vehicles for racing/rallying, and in particular to motorcars, the unit has many other applications, including, for example, driver training for cars, heavy goods vehicles, trains or the like.

The data acquisition means 12 comprises an integral image capture device 24 for capturing video images, or the like, as the vehicle is driven or ridden around a race circuit. The image capture device 24 may be any suitable image recording means, for example, a digital video camera. The image capture device 24 is adjustable to allow a user to select the direction the device 24 points in operation and hence the nature of the images captured. The device 24 is located on the unit 10 such that in operation, when the unit is secured in or on the vehicle, the image capture device 24 may be adjusted to capture images of the track/road on which the vehicle is driven/ ridden. It will be appreciated that alternatively, or additionally, the integral image capture device 24 may be located such that it may be adjusted for capture of internal images of a vehicle cockpit, for example, to show vehicle controls such as gear leaver, steering or the like.

The data acquisition means 12 further comprises integral sound capture means 26 for cockpit voice recording or the like. The sound capture means 26 comprises any suitable sound capture device, for example, a microphone of known design. In operation, the sound capture means 26 may be used to capture cockpit sound, for example, to allow a training video to be recorded by an experienced driver completing a race circuit, whilst talking through the driving technique used at the various corners.

The data acquisition means 12 further comprises an integral position locator 28 for accurately calculating the position of the unit 10 and hence any vehicle in / on which the unit 10 is secured. The position locator means 28 may comprise any suitable means for calculating the position of the unit 10, but typically comprises a Global Positioning System (GPS) receiver module of known design, for calculating the Universal Transverse Mercator (UTM) coordinates of the unit 10. The GPS module may be of any suitable configuration but will typically acquire the correct UTM coordinates every 200 milliseconds, representing a capture frequency of 5Hz. The GPS module is provided with an associated integrated antenna, and an interface 30 for an external GPS aerial. Hence, in operation, when the vehicle is moving the position of the vehicle may be constantly monitored and tracked, and the average speed of the vehicle between each capture point accurately calculated.

It will be appreciated that whilst a GPS module is particularly advantageous, other position location means may be used. For example, the position locator 28 could comprise a module for detecting racing circuit trackside beacons or the like.

In order to allow for more accurate positioning to be calculated, the data acquisition means 12 of the unit 10, also includes an accelerometer 32 for determining the acceleration of the unit 10 and hence the vehicle in/on which it is positioned. Data from the accelerometer 32 and the position locator 28 are cross-referenced, in operation, to allow a more accurate calculation of vehicle position, and speed to be carried out by the micro-control circuitry. Use of the accelerometer in this manner allows accurate data to be acquired every 10ms, representing a ]capture frequency of 100Hz.

The accelerometer 32 may comprise any suitable module for determining acceleration, but typically comprises a miniature accelerometer having perpendicular X and Y acceleration sensors located parallel to a base of the unit 10. The accelerometer is a module of known design comprising an oscillator, impedance transformation circuitry, an amplified detector circuit, a comparator comprising an analogue to digital converter and an on/off circuit.

The data storage means 14 comprises internal memory 36 and an external media interface 38. The internal memory 36 may comprise any suitable digital storage device, but will typically include a large capacity hard disk drive, and at least one RAM chip. The external media interface 38 is configured to allow external media 38 such as a Secure Digital (SD) card or the like to be interfaced with the system, such that data stored in the unit 10 may be downloaded to the external media 38, and data stored on the external media 38 may be uploaded to the unit 10.

The internal memory 36 is configured to stored data acquired by the data acquisition means 12, in operation. The data stored may include, for example, digital video files, digital audio files, individual image files, and/or parametric data files. Parametric data such as speed, lap times, location coordinates etc. may, for example, be stored in data files such as delimited text files, spreadsheet files or the like.

In operation, the internal memory 36 is provided with preload data relating to the location at which the unit is to be employed in operation. Typically, for example, the preload data comprises geographical data comprising an overlay map of a racing circuit, rally track or the like, which is calibrated against the coordinate system employed by the position locator 28 so that the position of the unit can be located on the map. The preload data may also include other location specific data, for example, times such as lap/split time records, acceleration/deceleration values, training data, or other operational parameters for the vehicle in question. Furthermore, the preload data may include vehicle specific data relating to the vehicle in/on which the unit 10 is positioned. Where training data is preloaded, for example, it may be both vehicle and location specific relating, for example, to the optimum driving technique for a specific vehicle on a specific track or circuit.

It will be appreciated that the internal memory 36 may be provided with preload data relating to a plurality of locations and/or vehicles which may, in operation, be selected by a user using a menu system or the like. The preload data may be uploaded to the unit 10 either via the external media interface 38, or via the external connection means.

The micro-control circuitry 16 is configured to control the functionality of the modules making up the unit 10 and includes data analysis means configured to analyse and interpret the acquired and/or stored data, to manipulate the data to provide a desired output, and to store the manipulated data in an appropriate format in the internal memory. In operation, for example, the analysis means analyses the data acquired by the position locator 28, and associates the calculated location coordinates with the location specific preload data, and other data acquired in real time at that location.

Where the preload data comprises an overlay map the data analysis means is configured to analyse position related data from the position locator and to associate that position with a corresponding location on the map, thereby allowing the position to be accurately plotted.

The micro-control circuitry 16 is further configured to provide appropriate synchronised data streams for output by the output means 18 in operation. The output streams are user selectable, but typically comprise at least one video output stream, an audio output stream, a vehicle data output stream, and/or a map position data output stream.

The micro-control circuitry 16 may comprise any suitable means for controlling the unit and for analysing, manipulating, and outputting the acquired/stored data. Typically, however, the micro-control circuitry 16 comprises an appropriate processor chip having associated input and output circuitry and programmed with appropriate firmware.

In addition to control functionality, the firmware is programmed to provide a user of the unit 10 with a menu system, via the output means, for setting up the unit 10 in a desired configuration, for uploading data to or downloading data from the unit 10, and for using the unit generally.

The output means 18 comprises an integral display device 40 and audio output device 42. The display 40 may comprise any suitable means for outputting stored data including the streamed/stored video, preloaded data such as a location map, and/or other image data as required. Typically, for example, the display comprises a flat panel display device comprising a thin film transistor (tft) screen or the like of known design. Similarly the audio output device comprises any suitable means for outputting streamed/stored audio data such as recorded voice and/or other stored sound files. Typically, for example, the audio device comprises at least one speaker and associated audio output circuitry of known design. It will be appreciated that the audio output device 42 may form an integral part of the display 40.

The external connection means 20 comprises a plurality of interfaces for interconnection with external hardware. The interfaces include at least one interface for interconnection with an additional input device 50, 52, and at least one interface for interconnection with an external computer 54 for communication between the unit and the computer, for example, to allow the upload of preload data to the unit 10, and/or the download of acquired/captured data from the unit 10.

In the exemplary embodiment described the external input device interfaces 50, 52 comprise two connections 50 for external video cameras and one connection 52 for an external microphone. Suitable interfaces are well known and may include, for example, BNC connection interfaces for the video cameras and a known microphone socket. It will be appreciated that external connectivity may be provided for any number or type of input device as appropriate using any appropriate interface. Furthermore, the interfaces may be adapted for connection to any of a plurality of devices. The connection means 20 may include, for example, an interface suitable for interconnection with means for acquiring real-time vehicle parametric/telemetry data if required.

The computer interface 54 comprises any suitable means for providing a communication link between an external computer and the unit 10. Typically, for example, the interface 54 comprises a Universal Serial Bus (USB) interface. Alternatively, or additionally, the interface 54 may comprise a wireless interface for wireless communication with the external computer. It will be appreciated that the computer interface 54 may be configured such that, in operation, the interface may be interconnected with other input devices, for example USB cameras or the like.

The external connection means 20 also includes wireless connection means 56 for communication with at least one wireless input device, such as a 2.4GHz video camera signal receiver or the like. The connection means 56 comprises associated receiver circuitry configured for receiving wireless input data and for streaming it for analysis, manipulation and/or storage by the data analysis means. In the exemplary embodiment the wireless connection means 56 are configured for communication with two external wireless video cameras although it will be appreciated that many other configurations are possible.

The provision of the wireless interface 56 is particularly advantageous because it allows the unit 10 to be configured to receive data from external input devices without complex wiring, for example, from a wireless video camera located on a vehicle bumper.

It will be appreciated that the unit 10 may also be provided with wireless communication means configured for two way communication with other similar units, for example, to allow data relating to other vehicles carrying the similar units to be acquired for comparative purposes during training or a race. Track position of other vehicles, for example, could be automatically acquired, analysed by the data analysis means, and the associated position plotter on a preloaded map overlay in conjunction with the position of the vehicle in/on which the unit 10 is secured. Similarly, best lap/split times, vehicle speeds, time/distance between vehicles etc. could be logged, compared, and/or displayed in this manner.

It will be further appreciated that the unit may alternatively or additionally be provided with a wireless module comprising a GPRS or similar based modem for the download and upload of data directly from/to trackside equipment, other units in other vehicles, and/or mobile communication enabled devices anywhere in the world via an appropriate communications link. This could include e-mail, the internet, SMS text messaging or the like.

The external connection means 20, includes an interface 60 for an external wireless aerial to allow improved wireless communication between the unit 10 and other units, trackside computers, wireless input devices etc. It will be appreciated that appropriate addressing is built into each unit 10 to allow individual identification of the unit 10, and any associated wireless input devices, without interference between different units. The units, wireless input devices and external computers could, for example, be configured to form part of an ad hoc communications network.

The manual control means 22 comprises a pointer controller 80 and a plurality of functional buttons 82 for navigating the menu system provided by the firmware and for making associated selections. Typically, for example, the manual control means comprises a D-pad , joy pad, joystick or the like and two associated buttons having similar functionality to the left and right buttons of a computer control mouse of well known design.

Electric power for the unit 10, is provided by an integrated power module 70. The power module 70 comprises a rechargeable battery portion 72, and charging circuitry 74. The battery portion 72 may comprise any suitable arrangement including at least one rechargeable battery. Typically, for example, the rechargeable battery portion comprises a pair of lithium polymer ion batteries. The charging circuitry 74 comprises means for connecting the battery portion 72 to an external mains or other appropriate power supply such an in vehicle power supply of a type common to most vehicles. The circuitry 74 includes over voltage protection comprising an appropriately earthed Zener diode or the like to prevent the charging voltage applied to the battery portion 72 from exceeding a predetermined voltage (typically 14.2V). The charging circuitry 74 also includes means for detecting the availability of an external power supply suitable for charging, and means for suppressing charging, when not required, to prevent over charging of the battery portion 72 and any associated lifetime reduction. The charging circuitry 74 also includes appropriate voltage regulation circuitry to ensure a stable charging voltage, and reverse polarity protection circuitry including a diode to prevent any reverse polarity potential applied to the charging circuitry from causing associated damage.

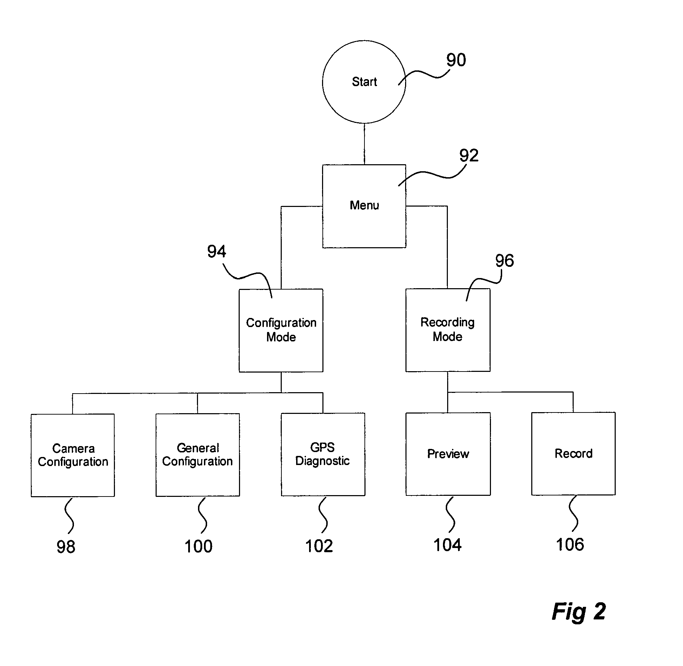

Figure 2 shows a high level simplified flow diagram illustrating typical operation of the menu system provided in the firmware. It will be appreciated that figure 2 shows just one simplified example of a suitable menu system for the purposes of illustration and clarity. The actual menu system provided by the firmware may include several additional features in a more complex implementation.

When the unit is switched on at 90, an appropriate operating system associated with the micro-control circuitry initiates the menu system provided in the firmware as shown at 92. The user is then presented with a choice of two operating modes 94, 96, a configuration mode 94 and a data acquisition mode 96.

The configuration mode 94 is programmed to provide the user with a plurality of configuration options including, a capture device configuration option 98, a general configuration option 100, and a position locator diagnostic / setup option 102. The configuration mode 94 may provide any number of options to allow configuration, testing, and setup of both the integral modules making up the unit 10, and the external modules interfaced to it.

The data acquisition mode 96 is programmed to provide the user with a preview option 104 for previewing the data input to and/or stored on the unit 10, and a capture or record option 106 for initiation of data acquisition via the integral or external data capture devices.

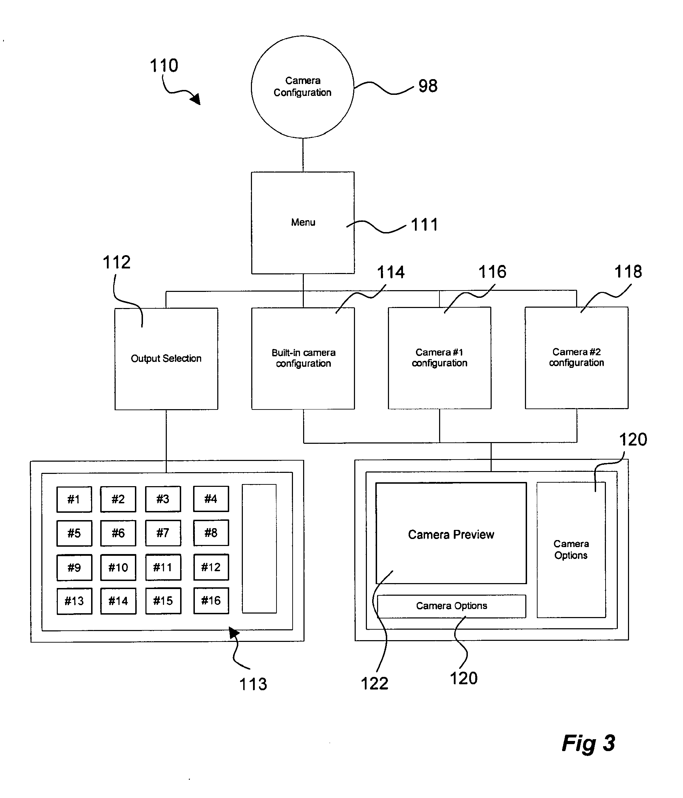

Referring now to figure 3, an exemplary flow chart for a sub-menu of the device configuration option 98 is shown generally at 110. The menu shown is for a capture device configuration option, comprising image capture devices such as cameras or the like. It will be appreciated, however, that a similar menu may be implemented for any data capture device.

The menu 110 comprises an output selection option 112, and a plurality of configuration options 114, 116, 118, at least one for each capture device of interest.

The output selection option 112 allows the user to select from a plurality of outputs 113 to which data from a selected data capture device may be streamed in operation. For example, the captured / stored data may be output to any of a number of different sections of the output device display to give a split screen / tiled effect showing different data as required by the user.

The device configuration options 114, 116, 118, are each programmed to provide a set of device specific configuration options to the user for setting up the associated device and for setting user preferences. In the image capture example shown, for example, options 114, 116, 118 are provided for the integral image capture device 24, and two externally connected devices. On selection of a configuration option 114, 116, 118, for a specific device, the user is presented with a plurality of setup options and preferences 120. Where appropriate a preview 122 of real-time data captured by the device is also made available.

Referring back to figure 2, the general configuration option 100 allows a user to configure the unit 10 as desired, for example to adjust the way in which data is viewed or to set up user preferences for the unit 10.

The set-up / diagnostic option is provided for periodically testing the GPS module, for example, for accuracy, and/or to allow the device to be calibrated as appropriate.

A typical applications of the unit 10 will now be described, by way of example only, to illustrate the invention.

In a typical training application at a race circuit, for example, the unit 10 is preloaded with data captured from a vehicle driven or ridden by an experienced driver completing a lap of the circuit. The unit 10 is then configured to output the acquired data via the output means 18 in a desired arrangement. The arrangement may include, for example, sections for showing stored video captured from an in-car and an externally mounted camera or the like. The arrangement may also include a section for showing a preload overlay map of the circuit in combination with an associated indicator of vehicle track position derived from the position locator and synchronised with the video images. Other sections could be set up to show vehicle speed, maximum and/or average speed, current lap/split time, and vehicle telemetry / parametric data, if available. It will be appreciated that several alternative arrangements are possible.

A driver undergoing training then reviews the data relating to the lap of the experienced driver to familiarise the trainee driver with the circuit. The unit 10 is positioned in a desired position in a vehicle, is connected to any external devices as required, and is configured for data acquisition. The trainee driver then completes a lap while the unit 10 acquires the associated video and other track position related data via the integral and any external capture devices. It will be appreciated that the unit 10 may be configured to simultaneously output data to the output means 18, for example, to show the current track position of the trainee driver and associated times, speed, or the like. The unit 10 may also be configured to simultaneously output synchronised data relating to that lap of the experienced driver, for example, the track position on the overlay map, to provide a real-time indication of comparative performance to the trainee driver or an instructor travelling in the same vehicle.

After the lap is completed, the instructor, and/or the trainee driver review the acquired data, to assess performance and to highlight possible areas for improvement. The data can be reviewed on the unit itself or may be downloaded to an external computer so the unit 10 is available for use by another driver. Individual data streams may be isolated, for example images from a specific camera, and compared in split screen to corresponding images from the lap of the experienced driver.

It will be appreciated that the unit is of benefit in many other applications. Each of a plurality of units 10 may, for example, be placed in individual competing vehicles in a race or the like. Each competitor could then be provided with real-time images showing track position and/or performance of other competitors. After the race, the data acquired by each module can be reviewed to assess performance and areas for possible improvement.

In another application the unit 10 could be used to assist in the training of navigators for rally driving. Rally courses could be preloaded to the unit 10 in association with navigation commands relating to bend type, appropriate gear etc. A novice navigator can then simply read from the commands as the vehicle is driven around the course.

In another embodiment of the invention the data logger is provided as unit configured for wearing by a user, for example, as a head mounted unit. Such a unit has additional application, for example, for the recording / monitoring / and displaying data acquired on foot, riding a horse or bicycle, or the like. Such a unit is particularly useful for acquiring data directly from a user's perspective of a particular situation or event.

In another application of the invention the unit is provided in or on a vehicle for 'black box' style recordal of information. Such information could be used in accident investigation, for example, by the police or to support or challenge an insurance claim. Vehicles fitted with such a device could, for example, be subject to reduced insurance premiums because of the ease with which insurance claims could be investigated.

Where the unit is used in/on a conventional road vehicle the preloaded information could include a database of useful information such as the location of accident black spots, road speed limits, accident blackspots, and the like, in conjunction with other preloaded information such as a map overlay. The unit could be configured to issue a warning when a blackspot is being approached, or when the speed limit is exceeded.

## Claims

1. An integrated data logging unit for mounting to a vehicle comprising:
data input means for capturing data relating to a position of said unit;
analysis means for analysing said captured data and for associating said captured data with prestored data, said prestored data comprising geographical information and parametric data relating to one or more operational parameters of said vehicle;
and information output means for outputting said captured data and said associated geographical information;
wherein said data input means comprises image capture means for capturing images related to said position, and a position locator for calculating co-ordinates directly indicative of said position;
wherein said analysis means is configured to analyse said calculated co-ordinates and to associate said stored geographical information with said co-ordinates;
and wherein said information output means comprises visual display means for displaying said captured images, and said geographical information associated with said co-ordinates.

2. A data logger as claimed in claim 1 wherein the image capture means comprises a digital video camera module for capturing moving images.

3. A data logger as claimed in claim 1 or 2 wherein the position locator comprises a global positioning system module.

4. A data logger as claimed in claim 1, 2 or 3 further comprising connection means for connection with external devices.

5. A data logger as claimed in claim 4 wherein said connection means comprises means for connecting with an external computer.

6. A data logger as claimed in claim 4 or 5 wherein said connection means comprises means for connecting with an external image capture device.

7. A data logger as claimed in claim 4, 5 or 6 wherein said connection means comprises means for connecting with a microphone

8. A data logger as claimed in any one of claims 4 to 7 wherein said connection means comprises means for connecting wirelessly with at least one said external device.

9. A data logger as claimed in any of claims 4 to 8 wherein at least one said external device comprises a further data logger according to any preceding claim.

10. A data logger as claimed in any preceding claim wherein said stored geographical information comprises a digitally stored map, and wherein:
associating said captured data with said prestored geographical information comprises determining a position of said unit on said map substantially at the moment said captured data was acquired, and associating said captured data with said position.

11. A data logger as claimed in claim 10 wherein said analysis means is configured for the output of said map via said output means, in conjunction with a visual indication of said position on said outputted map.

12. A data logger as claimed in claim 10 or 11, wherein said position locator is calibrated with respect to said prestored geographical information.

13. A data logger as claimed in any preceding claim, wherein said data input means further comprises means for capturing parametric data relating to an operational parameter of said vehicle.

14. A data logger as claimed in claim 13, wherein said analysis means cross-references said captured parametric data with said calculated co-ordinates from said position locator to verify the position of the unit.

15. A data logger as claimed in claim 13 or 14 wherein the data input means comprises an accelerometer.

16. A data logger as claimed in any one of claims 13 to 15, wherein said analysis means is arranged to store instantaneous parametric data captured at a plurality of predetermined co-ordinates for subsequent display in conjunction with geographical information relating to said coordinates so as to allow a user to compare said captured instantaneous parametric data with prestored parametric data relating to the same co-ordinates.

17. A data logger as claimed in claim 17, wherein said instantaneous parametric data is stored against an entry for said co-ordinates for subsequent retrieval by a user.

18. A data logger as claimed in any preceding claim, wherein said logger comprises a portable unit having a display screen and which is selectively positionable within mounting means in a vehicle, wherein the portable unit has one or more interfaces for selective connection to one or more further data input, analysis or output means.
